# EUROPÄISCHE PATENTSCHRIFT

(11) **EP 2 964 419 B1**
(45) Veröffentlichungstag und Bekanntmachung des Hinweises auf die Patenterteilung: **03.04.2019**
(21) Anmeldenummer: 14710792.4
(22) Anmeldetag: 29.01.2014
(51) Int. Cl.: B23K 31/12, B23K 26/34, B29C 67/00, B22F 3/105

(54) **VERFAHREN ZUR BEURTEILUNG DER STRUKTURQUALITÄT VON DREIDIMENSIONALEN BAUTEILEN**
METHOD FOR ASSESSING THE STRUCTURAL QUALITY OF THREE-DIMENSIONAL COMPONENTS
PROCÉDÉ D'ÉVALUATION DE LA QUALITÉ DE LA STRUCTURE DE COMPOSANTS TRIDIMENSIONNELS

(30) Priorität: 08.03.2013 DE 102013003937
(43) Veröffentlichungstag der Anmeldung: 13.01.2016
(60) Teilanmeldung: 18215619.0
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl
(86) Internationale Anmeldenummer: PCT/DE2014/000036
(87) Internationale Veröffentlichungsnummer: WO 2014/135137

(56) Entgegenhaltungen:
- DE-U1-202010 010 771

## Beschreibung

Die Erfindung betrifft ein Verfahren zur Beurteilung der Strukturqualität von dreidimensionalen Bauteilen, die durch ein Lasersinter- oder ein Laserschmelzverfahren hergestellt werden. Bei Lasersinter- oder Laserschmelzverfahren werden Bauteile durch aufeinanderfolgendes Verfestigen einzelner Schichten eines Baumaterials durch Sintern oder Aufschmelzen verfestigt. Der durch einen punkt- oder linienförmigen Energieeintrag erzeugte Schmelzbereich wird durch eine Sensorvorrichtung erfasst, daraus werden Sensorwerte zur Evaluierung einer Bauteilqualität hergeleitet und die Sensorwerte zusammen mit den die Sensorwerte im Bauteil lokalisierenden Koordinaten werden abgespeichert.

Ein derartiges Verfahren geht aus DE 20 2010 010 771.7 hervor. Beim Stand der Technik ist es bereits möglich, anhand der Sensorwerte zu entscheiden, ob sich beim Bauvorgang im Bauteil strukturkritische, d. h. sich auf die Qualität, insbesondere die Festigkeit des Bauteils auswirkende Störstellen gebildet haben, bei denen z. B. das Baumaterial nicht in der vorhergesehenen Weise verfestigt ist oder sich aufgrund des Bauvorganges sonstige Störstellen gebildet haben.

Der Erfindung liegt die Aufgabe zugrunde, ein Verfahren mit den Merkmalen des Patentanspruches 1 derart auszubilden, dass nach Fertigstellung des hergestellten Bauteils mit reduziertem Aufwand an diesem weitergehende Untersuchungen wie z. B. Bruchtests, Bauteilschnitte durchgeführt werden können. Diese Aufgabe wird durch die kennzeichnenden Merkmale des Anspruches 1 gelöst. Vorteilhafte Weiterbildungen ergeben sich aus den Unteransprüchen.

Als Kern des Verfahrens wird es angesehen, zunächst einmal die ermittelten Sensorwerte grundsätzlich zu unterteilen in Sensorwerte, die für die Strukturqualität des Bauteils kritisch erscheinen und solche, die als unkritisch eingestuft werden. Die kritischen Sensorwerte können dann abstandsbezogen auf einen im Bereich der Oberfläche des Bauteils liegenden oder angeordneten Bezugspunkt dargestellt werden. Mit anderen Worten ist es möglich, kritische Sensorwerte z. B. abstandsbezogen zu einer Bodenfläche des Bauteils darzustellen oder zu einer ausgewählten Seitenfläche. Die Bedienungsperson weiß dann ganz genau, in welcher Tiefe bezogen auf die ausgewählte Seitenfläche ein Fehler zu vermuten ist und hat dann die Möglichkeit, an der entsprechenden Stelle des Bauteils z. B. Bruchtests durchzuführen oder mittels einer Diamantsäge das Bauteil aufzuschneiden und im Wege eines "Reverse Engineering" nachzuforschen, welche Auswirkungen Störungen beim Bauvorgang auf das Bauteil, insbesondere auf dessen Strukturqualität und damit auf die Festigkeit des Bauteils haben. Die genaue abstandsbezogene Lokalisierung zu einem Außenbereich des Bauteils ermöglicht es, das Bauteil z.B. einzuspannen und dann genau an der entsprechenden Stelle aufzusägen, aufzubohren oder sonstige Tests durchzuführen, um den als kritisch eingestuften Innenbereich des Bauteils zu erforschen.

Als Bezugspunkt, der zur abstandsbezogenen Darstellung der für die Strukturqualität des Bauteils kritischenweise dienen kann, bieten sich definierte Punkte auf einer Außenfläche des fertigen Bauteils, eine Kante des Bauteils oder z. B. eine Spannausnehmung oder ein Spannvorsprung an dem fertiggestellten Bauteil an. Spannausnehmungen oder Spannvorsprünge dienen an Bauteilen dazu, diese nach dem Bauvorgang mit Hilfe eines Spannsystems in eine Bearbeitungsmaschine einzusetzen und über das Spannsystem exakt zu positionieren. Ist der genaue Abstand bzw. die genaue Innenlage von Störstellen im Bauteil bezogen auf den Spannpunkt bekannt, dann kann z.B. über einen Bearbeitungsautomaten eine genaue Untersuchung des fertiggestellten Bauteils erfolgen, z.B. durch eine zerspanende Technik oder auch durch zerstörungsfreie Untersuchungsmethoden.

Wird eine Vermaßung zwischen dem gewählten Bezugspunkt, z. B. dem Spannpunkt und einem als strukturkritisch beurteilten angezeigten Sensorwert, der eine Störstelle im Bauteil darstellen kann, vorgenommen, dann lassen sich Untersuchungsgeräte wie beispielsweise eine Schneidevorrichtung, eine Bohrvorrichtung, eine Bruchvorrichtung, mit der das Bauteil an einer ganz bestimmten Stelle auf Bruch getestet werden soll und dgl. besonders exakt an das zu untersuchende Bauteil heranführen.

Zur Beschleunigung des Verfahrens und zur Vereinfachung einer Darstellung ist es vorteilhaft, wenn das Bauteil vorab in belastungskritische und belastungsunkritische Bereiche aufgeteilt wird und eine Anzeige von als strukturkritisch eingestuften Sensorwerten nur in belastungskritischen Bauteilbereichen vorgenommen wird. Damit lässt sich die nach Art eines "Computertomogramms" auszuführende 3D-Darstellung vereinfachen und deutlich übersichtlicher machen. Belastungsunkritische Bereiche des Bauteils werden nicht mit Sensorwertdarstellungen versehen und bleiben damit transparent, sodass die belastungskritischen Bauteile besser inspiziert werden können. Unter Umständen ist es aber vorteilhaft, besonders strukturkritische Sensorwerte, d. h. Sensorwerte die auch belastungsunkritische Bauteile als Ausschuss ausweisen könnten, mit angezeigten Sensorwerten zu versehen.

Bei der Konstruktion eines Bauteils ist es möglich, von vorne herein in belastungskritischen Bauteilen aufgrund konstruktiver Vorgegebenheiten mögliche Bruchlinien zu definieren. Treten in der Nähe solcher vorab bestimmter Bruchlinien als strukturkritisch beurteilte Sensorwerte auf, dann ist Vorsicht geboten. Deswegen ist es vorteilhaft, Bruchlinien zu definieren, unter Umständen sogar in der Darstellung anzuzeigen und als strukturkritisch beurteilte Sensorwerte bezogen auf mögliche Bruchlinien darzustellen. Dabei kann auch der Abstand zwischen den strukturkritischen Sensorwerten und möglichen Bruchlinien vermaßt dargestellt werden, um dem Betrachter genaue Auskunft zu geben, wie weit als strukturkritisch beurteilte Sensorwerte von möglichen Bruchlinien entfernt sind. Es ist auch möglich, eine Mehrzahl von nahe beieinanderliegenden als strukturkritisch einzustufenden Sensorwerten als Sensorwertecluster anzuzeigen. Reicht z. B. ein Sensorwertecluster mit strukturkritischen Herstellungswerten in die Nähe einer Bruchlinie oder gar über diese hinweg, so ist davon auszugehen, dass das Bauteil bei Belastung im Bereich der Bruchlinie zu Bruch geht. Dann kann eine bestehende hohe Bruchgefahr auf einem Display angezeigt werden, ohne dass das Bauteil einem Bruchtest unterzogen wird.

Die Bruchgefahr kann im Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster und deren Abstand zu einer möglichen Bruchlinie erfolgt.

Die Ansprüche 12 - 14 beschreiben Maßnahmen, die zu einer zerstörenden Untersuchung des Bauteils führen und Aufschluss geben, welcher Art die Strukturstörungen sind, die von den Sensorwerten angezeigt werden können und welche Festigkeitsfolgen diese Strukturstörungen auf das Bauteil haben.

Die Erfindung ist anhand vorteilhafter Ausführungsbeispiele näher erläutert. Diese zeigen:
- Fig. 1: eine schematische zweidimensionale Darstellung eines z.B. knochenförmigen, d.h. mittig eingeschnürten Bauteils mit verfahrensgemäß dargestellten kritischen Sensorwerten;

- Fig. 2: eine schematische 3D-Darstellung eines stangenartigen Bauteils mit angezeigten Sensorwerten.

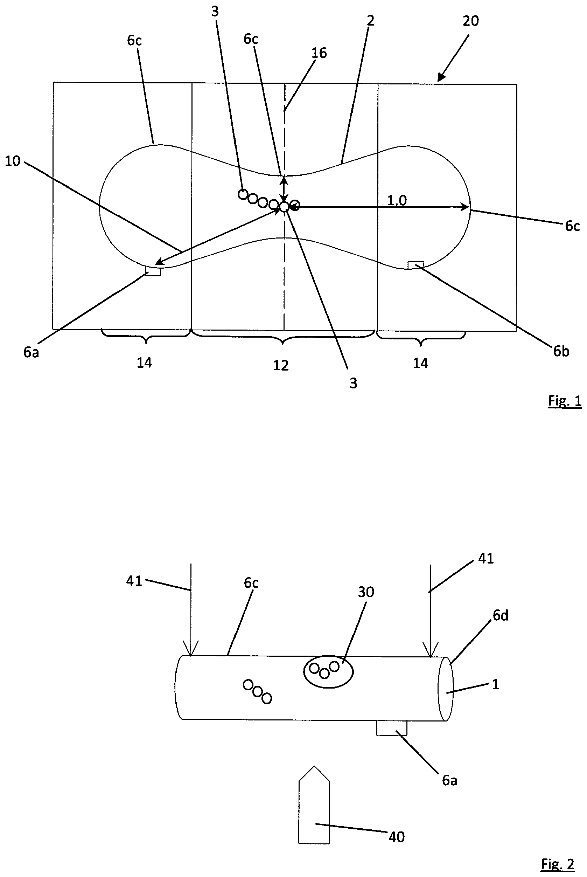

Bei dem Verfahren werden durch ein Lasersinter- oder Laserschmelzverfahren Bauteile hergestellt. In Fig. 1 ist ein knochenartiges Bauteil 1 mit einer Einschnürung 2 im Mittelbereich des Bauteils 1 zweidimensional, d.h. als Bauteilschicht dargestellt. Verfestigung des Bauteils erfolgt durch Verfestigung einzelner Schichten durch die Einwirkung einer Strahlung durch Sintern oder Aufschmelzen eines pulverartigen Baumaterials. Der Schmelzbereich, der durch den Energieeintrag entsteht, wird durch eine Sensorvorrichtung erfasst und daraus werden Sensorwerte zur Evaluierung einer Bauteilqualität hergeleitet. Die Sensorwerte können zwei- oder mehrdimensional bezogen auf ihren Erfassungsort im Bauteil 1 dargestellt werden, z.B. durch fleckartige Abbildungen von Bauteilstörstellen 3.

Die Sensorwerte werden zusammen mit den die Sensorwerte im Bauteil 1 lokalisierenden Koordinatenwerten abgespeichert.

Gemäß der Erfindung werden zunächst die ermittelten Sensorwerte in für die Strukturqualität des Bauteils 1 kritische und unkritische Werte unterteilt. Dies bedeutet, dass z.B. abhängig von der Größe einer Störung, von einer Temperaturabweichung beim Bauvorgang, von Pulverfehlstellen im Schichtauftrag und dergleichen die Sensorwerte in kritisch und unkritisch unterteilt werden und wenigstens die für die Strukturqualität des Bauteils 1 kritischen Werte abstandsbezogen auf einen im Bereich der Oberfläche 5 des Bauteils liegenden oder angeordneten Bezugspunkt dargestellt werden. Als Bezugspunkt 6 kann beispielsweise ein Spannvorsprung 6a, eine Spannausnehmung 6b oder ein beliebiger Punkt 6c auf der Oberfläche 5 des Bauteils herangezogen werden. Bedeutungsvoll ist in diesem Zusammenhang, dass nach Fertigstellung des Bauteils 1 ausgehend von der Oberfläche 5 des Bauteils festgestellt werden kann, wo und insbesondere in welcher Tiefe im Bauteil die kritischen Werte 3 angeordnet sind.

In vorteilhafter Weise erfolgt eine Visualisierung der kritischen Sensorwerte mittels einer Visualisierungseinrichtung, wobei eine Vermaßung 10 durch Maßpfeile hilfreich ist, um ausgehend von einem gewählten Bezugspunkt 6 den kritischen Wert im Bauteilinneren aufzuspüren.

Ausgehend von konstruktiven Gegebenheiten kann ein Bauteil 1 in belastungskritische Bereiche 12 und belastungsunkritische Bereiche 14 aufgeteilt werden und eine Anzeige von als strukturkritisch eingestuften Sensorwerten 3 nur in den belastungskritischen Bauteilbereichen 12 erfolgen. Allerdings sollten vorteilhafterweise besonders strukturkritisch beurteilte Sensorwerte, d.h. Fehlstellen, die hinsichtlich der Bauteilqualität als besonders kritisch einzustufen sind, in allen Bauteilbereichen 12, 14 angezeigt werden.

Verfahrensgemäß ist es möglich, in belastungskritischen Bauteilbereichen 12 aufgrund konstruktiver Vorgegebenheiten mögliche Bruchlinien 16 zu definieren und die als strukturkritisch beurteilten Sensorwerte bezogen auf eine mögliche Bruchlinie 16 darzustellen. Liegen ein oder mehrere kritische Sensorwerte 3 nahe bei oder sogar auf einer Bruchlinie 16, dann ist eine relativ hohe Bruchwahrscheinlichkeit des Bauteils 1 vorhanden, die auf einer Anzeigevorrichtung einer Visualisierungseinrichtung 20 z.B. in Form eines Bildschirms angezeigt werden kann. Darüber hinaus ist es vorteilhaft, eine Mehrzahl von strukturkritischen Sensorwerten, die nahe beieinander liegen als Sensorwertecluster 30 anzuzeigen, weil nahe beieinander liegende kritische Sensorwerte aufgrund einer Strukturwechselwirkung natürlich besonders kritisch für die Bauteilqualität sind.

Auf der Visualisierungseinrichtung 20 kann die Bruchgefahr in Bruchgefahrstufen angezeigt werden, wobei eine Einordnung in Bruchgefahrstufen abhängig von der Anzahl kritischer Sensorwerte, der Schwere der aufgrund der Sensorwerte zu erwartenden Strukturstörungen bezogen auf einzelne Sensorwerte oder Sensorwertcluster oder deren Abstand zu einer möglichen Bruchlinie 16 erfolgt.

In Zeichnungsfigur 2 ist noch dargestellt, wie ein fertig gestelltes Bauteil 1 in Stangenform mit einer Mehrzahl von kritischen Sensorwerten 3 oder Sensorwertclustern 30 in einem Bruchbelastungstest unterzogen wird. Dazu wird mit Hilfe des gewählten Bezugspunktes 6a, 6c oder 6d das Bauteil 1 zu einer Bruchschneide 40 positioniert und durch Ausübung einer Gegenkraft 41 auf die Bruchschneide 40 gedrückt. Derartige Bruchtests dienen dazu, um in Praxis die Auswirkungen von Strukturstörungen in Form von kritischen Sensorwerten 3 oder Sensorwertclustern 30 auf die Bruchqualität des Bauteils 1 zu untersuchen.

Grundsätzlich ist es möglich, mit Hilfe des Verfahrens auch unmittelbaren Einfluss auf den Herstellungsprozess zu nehmen und/oder zumindest eine Bedienungsperson während des laufenden Herstellungsprozesses über auftretende kritische Werte, die für die Strukturqualität des Bauteils relevant sind, zu informieren. Wird beispielsweise durch die Vorrichtung festgestellt, dass in einem Bauteilbereich, der als belastungskritisch angesehen wird, eine Mehrzahl von Störstellen auftritt, die durch kritische Sensorwerte angezeigt werden, dann kann eine optische oder akustische Warneinrichtung initiiert werden, um der Bedienungsperson eine entsprechende Mitteilung zu machen. Gegebenenfalls ist es aber auch möglich, die Belichtungseinrichtung der Vorrichtung zu veranlassen, kritische "unterbelichtete" Stellen des Bauteils noch einmal nachzubelichten bzw. nachzubestrahlen und dadurch den erforderlichen Schmelzprozess zu vervollständigen, falls eine ungenügende Bestrahlung des Bauteils in dem jeweiligen Bereich erkannt wurde. Gleiches gilt für einen Nachbeschichtungsprozess dann, wenn festgestellt wird, dass der Pulverauftrag an einer entsprechenden Stelle nicht komplett war. In diesem Falle ist es möglich, Bauteilbereiche mit zu wenig Baumaterial noch einmal nachzubeschichten und dann gezielt dort aufzuschmelzen, um Fehlstellen zu heilen.

### BEZUGSZEICHENLISTE

- 1: Bauteil
- 2: Einschnürung
- 3: Sensorwert

- 5: Oberfläche von 1
- 6a: Spannvorsprung
- 6b: Spannausnehmung
- 6c: beliebiger Punkt

- 10: Vermassung

- 12: belastungskritischer Bereich

- 14: belastungsunkritischer Bereich

- 16: Bruchlinie

- 20: Visualisierungseinrichtung

- 30: Sensorwertecluster

- 40: Bruchschneide
- 41: Gegenkraft

## Patentansprüche

1. Verfahren zur Beurteilung der Strukturqualität von dreidimensionalen Bauteilen (1), die durch ein Lasersinter- oder Laserschmelzverfahren hergestellt werden, bei welchem das Bauteil (1) durch aufeinanderfolgendes Verfestigen einzelner Schichten aus durch Einwirkung einer Strahlung verfestigbaren Baumaterials durch Sintern oder Aufschmelzen des Baumaterials erfolgt, wobei der durch einen punkt- oder linienförmigen Energieeintrag erzeugte Schmelzbereich durch eine Sensorvorrichtung erfasst wird und daraus Sensorwerte (3) zur Evaluierung einer Bauteilqualität hergeleitet werden und die Sensorwerte (3) zusammen mit den die Sensorwerte (3) im Bauteil (1) lokalisierenden Koordinatenwerten abgespeichert werden,
**gekennzeichnet durch**
- Einteilung der ermittelten Sensorwerte (3) in für die Strukturqualität des Bauteils (1) kritische Werte und unkritische Werte und
- Darstellung wenigstens der für die Strukturqualität des Bauteils (1) kritischen Werte abstandsbezogen auf einen im Bereich der Oberfläche (5) des Bauteils (1) liegenden oder angeordneten Bezugspunkt (6).

2. Verfahren nach Anspruch 1,
**dadurch gekennzeichnet, dass**
als Bezugspunkt (6) ein definierter Punkt (6c) auf einer Außenfläche (5) des fertiggestellten Bauteils (1), eine Kante (6d) des fertiggestellten Bauteils (1) oder eine Spannausnehmung (6b) oder ein Spannvorsprung (6a) an dem fertiggestellten Bauteil (1) definiert wird.

3. Verfahren nach Anspruch 1 oder 2,
**dadurch gekennzeichnet, dass**
die zur Evaluierung der Strukturqualität erfassten Sensorwerte (3) mittels einer Visualisierungseinrichtung (20) in zwei- oder mehrdimensionaler Darstellung bezogen auf ihren Erfassungsort im Bauteil (1) und bezogen auf den gewählten Bezugspunkt (6) auf dem Bauteil (1) dargestellt werden.

4. Verfahren nach einem der vorhergehenden Ansprüche,
**gekennzeichnet durch**
Anzeige einer Vermaßung (10) zwischen dem gewählten Bezugspunkt (6) und einem als strukturkritisch beurteilten angezeigten Sensorwert (3).

5. Verfahren nach einem der vorhergehenden Ansprüche,
**dadurch gekennzeichnet, dass**
das Bauteil (1) in belastungskritische (12) und belastungsunkritische Bereiche (14) aufgeteilt wird und eine Anzeige von als strukturkritisch eingestuften Sensorwerten (3) nur in belastungskritischen Bauteilbereichen (12) durchgeführt wird.

6. Verfahren nach einem der vorhergehenden Ansprüche,
**dadurch gekennzeichnet, dass**
als besonders strukturkritisch beurteilte Sensorwerte (3) in allen Bauteilbereichen (12, 14) angezeigt werden.

7. Verfahren nach einem der vorhergehenden Ansprüche,
**dadurch gekennzeichnet, dass** in belastungskritischen Bauteilbereichen (12) aufgrund konstruktiver Vorgegebenheiten mögliche Bruchlinien (16) definiert und die als strukturkritisch beurteilten Sensorwerte (3) bezogen auf eine mögliche Bruchlinie (16) darstellbar sind.

8. Verfahren nach einem der vorhergehenden Ansprüche,
**dadurch gekennzeichnet, dass**
dass eine Mehrzahl von beieinanderliegenden, als strukturkritisch einzustufenden Sensorwerten (3) als Sensorwertecluster (30) anzeigbar sind.

9. Verfahren nach einem der vorhergehenden Ansprüche,
**dadurch gekennzeichnet, dass**
die Sensorwertecluster (30) bezogen auf mögliche Bruchlinien (16) dargestellt werden und bei einem festzulegenden Häufungsgrad kritischer Sensorwerte (3) in der Nähe möglicher Bruchlinien (16) eine hohe Bruchgefahr angezeigt wird.

10. Verfahren nach einem der vorhergehenden Ansprüche,
**dadurch gekennzeichnet, dass**
die Bruchgefahr in Bruchgefahrstufen angezeigt wird, wobei eine Einordnung in Bruchgefahrenstufen abhängig von der Anzahl kritischer Sensorwerte (3), der Schwere der aufgrund der Sensorwerte (3) zu erwartenden Strukturstörungen bezogen auf einzelne Sensorwerte (3) oder Sensorwertcluster (30) und/oder deren Abstand zu einer möglichen Bruchlinie (16) erfolgt.

11. Verfahren nach Anspruch 7,
**dadurch gekennzeichnet, dass** der Abstand kritischer Sensorwerte (3) oder kritischer Sensorwertecluster (30) mit vermaßten Abstandslinien (10) bezogen auf mögliche Bruchlinien (16) dargestellt werden.

12. Verfahren nach einem der vorhergehenden Ansprüche,
**dadurch gekennzeichnet, dass**
das fertiggestellte Bauteil (1) in eine mittels seiner Spannausnehmung (6b) oder seinem Spannvorsprung (6a) oder bezogen auf eine Kante (6d) oder Fläche (6c) des Bauteils (1) in definierter Lage in eine Spannvorrichtung eingesetzt wird und ein Innenbereich des Bauteils (1) mit als strukturkritisch beurteilten festgestellten Sensorwerten (3) freigelegt wird.

13. Verfahren nach Anspruch 12,
**dadurch gekennzeichnet, dass**
das Freilegen des zu untersuchenden Innenbereiches des Bauteils (1) durch ein Aufschneiden des Bauteils (1), Aufbohren des Bauteils (1) oder Brechen des Bauteils (1) erfolgt.

14. Verfahren nach Anspruch 13,
**dadurch gekennzeichnet, dass**
das Brechen des Bauteils (1) in einer Bruchvorrichtung erfolgt, wobei eine Bruchschneide (40) der Bruchvorrichtung an einem Außenbereich des definiert eingespannten Bauteils (1) angelegt wird, unter welchem kritische Sensorwerte (3) angeordnet sind und zum Bruch des Bauteils (1) führende Kräfte auf das Bauteil (1) ausgeübt werden und eine Bruchlast bestimmt wird.

## Claims

1. Method for assessing the structural quality of three-dimensional components (1) which are produced by means of a laser sintering or laser melting process, in which the component (1) is effected by means of successive solidifying of individual layers of a construction material that can be solidified by the impact of a radiation by sintering or fusing the construction material, wherein the melting region created by punctual or linear energy input is detected by a sensor device and sensor values (3) for evaluating a component quality are derived therefrom and the sensor values (3) are stored together with coordinate values that locate the sensor values (3) in the component (1),
**characterised by**
- classification of the determined sensor values (3) into critical values and non-critical values for the structural quality of the component (1), and
- representation of at least the values critical for the structural quality of the component (1), in a distance-based manner with respect to a point of reference (6) positioned or arranged in the region of the surface (5) of the component (1).

2. Method according to claim 1,
**characterised in that**
a defined point (6c) on an outer face (5) of the completed component (1), an edge (6d) of the completed component (1), or a clamping recess (6b) or a clamping projection (6a) on the completed component (1) is defined as the point of reference (6).

3. Method according to claim 1 or claim 2,
**characterised in that**
the sensor values (3) detected for evaluating the structural quality are displayed, by means of a visualising means (20), in a two-dimensional or multi-dimensional representation on the basis of the detection location thereof in the component (1) and on the basis of the selected point of reference (6) on the component (1).

4. Method according to any of the preceding claims,
**characterised by**
displaying a dimension (10) between the selected point of reference (6) and a displayed sensor value (3) that is judged as being structurally critical.

5. Method according to any of the preceding claims,
**characterised in that**
the component (1) is divided into regions (12) critical for load and regions (14) non-critical for load, and a displaying of sensor values (3) assessed as being structurally critical occurs only in load-critical component regions (12).

6. Method according to any of the preceding claims,
**characterised in that**
sensor values (3) judged as being particularly structurally critical are displayed in all component regions (12, 14).

7. Method according to any of the preceding claims,
**characterised in that**
possible breaking lines (16) are defined in load-critical component regions (12), owing to constructive pre-specifications, and the sensor values (3) judged as structurally critical can be displayed based on a possible breaking line (16).

8. Method according to any of the preceding claims,
**characterised in that**
a plurality of adjacent sensor values (3) that are to be classified as structurally critical can be displayed as a sensor value cluster (30).

9. Method according to any of the preceding claims,
**characterised in that**
the sensor value clusters (30) are displayed based on possible breaking lines (16), and a high breaking risk is displayed in the case of an accumulation level of critical sensor values (3), to be specified, close to possible breaking lines (16).

10. Method according to any of the preceding claims,
**characterised in that**
the breaking risk is displayed in breaking risk levels, wherein a classification into breaking risk levels takes place depending on the number of critical sensor values (3) and the severity of the structural faults to be expected owing to the sensor values (3) based on individual sensor values (3) or sensor value clusters (30) and/or the spacing thereof from a possible breaking line (16).

11. Method according to claim 7,
**characterised in that**
the spacing of critical sensor values (3) or critical sensor value clusters (30) is displayed by means of measured spacing lines (10) based on possible breaking lines (16).

12. Method according to any of the preceding claims,
**characterised in that**
the completed component (1) is inserted in a clamping device in a defined position, by means of the clamping recess (6b) or clamping projection (6a) thereof or based on an edge (6d) or surface (6c) of the component (1), and an inner region of the component (1) comprising ascertained sensor values (3) assessed as structurally critical is exposed.

13. Method according to claim 12,
**characterised in that**
exposing of the inner region of the component (1) is effected by cutting open the component (1), drilling open the component (1) or breaking of the component (1).

14. Method according to claim 13,
**characterised in that**
breaking of the component (1) is effected in a breaking apparatus, wherein a breaking blade (40) of the breaking apparatus is applied to an outside region of the precisely clamped component (1) below which critical sensor values (3) are arranged, and forces resulting in breaking of the component (1) are exerted on the component (1), and a breaking load is determined.

## Revendications

1. Procédé d'évaluation de la qualité de la structure de composants tridimensionnels (1), qui sont fabriqués par un procédé de frittage par laser ou de fusion par laser, dans lequel le composant (1) est effectué par frittage ou fusion du matériau de construction par durcissement successif de couches individuelles de matériau de construction durcissable sous l'effet d'un rayonnement, la zone de fusion générée par un apport d'énergie en forme de point ou de ligne étant détectée par un dispositif de capteur et des valeurs de capteur (3) en étant tirées pour l'évaluation d'une qualité de composant et les valeurs de capteur (3) étant enregistrées avec les valeurs de coordonnées localisant les valeurs de capteur (3) dans le composant (1),
**caractérisé par**
- le classement des valeurs de capteur (3) détectées en valeurs critiques et valeurs non critiques pour la qualité de la structure du composant (1) et
- la représentation au moins des valeurs critiques pour la qualité de la structure du composant (1) concernant leur distance par rapport à un point de référence (6) situé ou placé dans une zone de la surface (5) du composant (1).

2. Procédé selon la revendication 1,
**caractérisé en ce que**
un point défini (6c) sur une surface extérieure (5) du composant (1) fini, une arête (6d) du composant (1) fini ou un évidement de serrage (6b) ou une saillie de serrage (6a) sur le composant (1) fini est défini(e) comme point de référence (6).

3. Procédé selon la revendication 1 ou 2,
**caractérisé en ce que**
les valeurs de capteur (3) détectées pour l'évaluation de la qualité de la structure sont représentées sur le composant (1) en représentation en deux dimensions ou plus au moyen d'un dispositif de visualisation (20), par rapport à leur lieu de détection dans le composant (1) et par rapport au point de référence (6) choisi.

4. Procédé selon l'une des revendications précédentes,
**caractérisé par**
l'affichage de dimensions (10) entre le point de référence (6) choisi et une valeur de capteur (3) affichée évaluée comme critique pour la structure.

5. Procédé selon l'une des revendications précédentes,
**caractérisé en ce que**
le composant (1) est divisé en zones critiques pour la charge (12) et non critiques pour la charge (14) et un affichage de valeurs de capteur (3) classées comme critiques pour la structure est réalisé uniquement dans des zones du composant critiques pour la charge (12).

6. Procédé selon l'une des revendications précédentes,
**caractérisé en ce que**
des valeurs de capteur (3) évaluées comme particulièrement critiques pour la structure sont affichées dans toutes les zones du composant (12, 14).

7. Procédé selon l'une des revendications précédentes,
**caractérisé en ce que**
des lignes de rupture (16) possibles en raison de spécifications de construction sont définies dans des zones de composant (12) critiques pour la charge et les valeurs de capteur (3) évaluées comme critiques pour la structure peuvent être représentées par rapport à une ligne de rupture (16) possible.

8. Procédé selon l'une des revendications précédentes,
**caractérisé en ce que**
une pluralité de valeurs de capteur (3) à classer comme critiques pour la structure et situées les unes à côté des autres peuvent être affichées comme groupes de valeurs de capteur (30).

9. Procédé selon l'une des revendications précédentes,
**caractérisé en ce que**
les groupes de valeurs de capteur (30) sont représentés par rapport à des lignes de rupture (16) possibles et en cas d'un degré d'accumulation à définir de valeurs de capteur (3) critiques à proximité de lignes de rupture (16) possibles, un risque de rupture élevé est affiché.

10. Procédé selon l'une des revendications précédentes,
**caractérisé en ce que**
le risque de rupture est affiché en niveaux de risque de rupture, un classement en niveaux de risque de rupture étant effectué en fonction du nombre de valeurs de capteur (3) critiques, de la gravité des défauts de structure à attendre en raison des valeurs de capteur (3) par rapport à des valeurs de capteur (3) individuelles ou des groupes de valeurs de capteur (30) et/ou de leur distance par rapport à une ligne de rupture (16) possible.

11. Procédé selon la revendication 7,
**caractérisé en ce que**
la distance des valeurs de capteur (3) critiques ou des groupes de valeurs de capteur (30) critiques est représentée par rapport à des lignes de rupture (16) possibles au moyen de lignes de distance (10) jaugées.

12. Procédé selon l'une des revendications précédentes,
**caractérisé en ce que**
le composant (1) fini est placé dans un dispositif de serrage dans une position définie au moyen de son évidement de serrage (6b) ou de sa saillie de serrage (6a) ou par rapport à une arête (6d) ou une surface (6c) du composant (1) et une zone intérieure du composant (1) avec des valeurs de capteur (3) constatées évaluées comme critiques pour la structure est dégagée.

13. Procédé selon la revendication 12,
**caractérisé en ce que**
le dégagement de la zone intérieure du composant (1) à examiner est effectué par découpage du composant (1), perçage du composant (1) ou rupture du composant (1).

14. Procédé selon la revendication 13,
**caractérisé en ce que**
la rupture du composant (1) est effectuée dans un dispositif de rupture, une lame de rupture (40) du dispositif de rupture étant appliquée sur une zone extérieure du composant (1) serré de manière définie, sous laquelle des valeurs de capteur (3) critiques sont placées et des forces conduisant à la rupture du composant (1) étant exercées sur le composant (1), et une charge de rupture étant déterminée.
